(19) Europäisches Patentamt / European Patent Office / Office européen des brevets

(11) **EP 3 450 787 B1**

(12) **FASCICULE DE BREVET EUROPEEN**

(45) Date de publication et mention de la délivrance du brevet:
**25.03.2020 Bulletin 2020/13**

(51) Int Cl.:
***F16D 48/06*** *(2006.01)*

(21) Numéro de dépôt: **18184913.4**

(22) Date de dépôt: **23.07.2018**

(54) **PROCÉDÉ DE PROTECTION D'UNE BUTÉE DE DÉBRAYAGE POUR UN VÉHICULE AUTOMOBILE**

VERFAHREN ZUM SCHUTZ EINES KUPPLUNGSANSCHLAGS FÜR EIN KRAFTFAHRZEUG

METHOD FOR PROTECTING A THROWOUT BEARING OF AN AUTOMOBILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2017 FR 1757931**

(43) Date de publication de la demande:
**06.03.2019 Bulletin 2019/10**

(73) Titulaire: **PSA Automobiles SA**
**78300 Poissy (FR)**

(72) Inventeurs:
• **PETIT, Benjamin**
**92500 Rueil Malmaison (FR)**
• **PREVOST, Christophe**
**51700 Courthiezy (FR)**

(56) Documents cités:
**WO-A1-2008/036014          DE-A1-102011 054 480**
**DE-A1-102013 211 635      GB-A- 2 164 408**
**US-B1- 9 174 573**

**Description**

Le domaine de l'invention concerne un procédé de protection d'une butée de débrayage d'un dispositif d'embrayage à commande à pédale d'embrayage pour un véhicule automobile. Voir WO 2008/036014.

Conventionnellement dans un groupe motopropulseur de véhicule automobile, un dispositif d'embrayage à commande à pédale d'embrayage est constitué d'un mécanisme permettant d'accoupler sélectivement un moteur thermique et une boite de vitesses. Ce mécanisme est constitué d'un couvercle, d'un diaphragme et d'un disque de pression. Le diaphragme est actionnable par une butée de débrayage mobile en translation pour ouvrir la chaine de transmission et ainsi rompre la transmission de couple entre le moteur thermique et la boite vitesses.

Pour certains types de dispositifs d'embrayage, la butée de débrayage est composée d'une interface en rotation de type roulement avec la partie intérieure du diaphragme et d'un plateau d'appui en interface avec la fourchette d'actionnement de la butée. En situation d'actionnement, le roulement est mis sous contraintes d'efforts résultant de l'action d'appui en translation de la fourchette combinée à la rotation de la butée à la vitesse du régime du moteur thermique. Ces actions d'appui et de rotation provoquent une usure de la butée d'embrayage.

Il a été constaté que de longs appuis sur la pédale d'embrayage ou une mauvaise conduite à répétition par le conducteur, notamment des appuis continus au feu rouge ou en bouchon, peuvent entrainer une détérioration prématurée de la butée de débrayage qui a pour conséquence une opération coûteuse de remplacement. Il est donc souhaitable de réduire le taux de panne de la butée.

Un renforcement du dimensionnement de la butée de débrayage n'est pas envisageable du fait des contraintes d'intégration au sein de la chaine de transmission. Par ailleurs, les techniques conventionnelles de protection d'un dispositif d'embrayage surveillent le régime de rotation des arbres en entrée et en sortie pour détecter des situations de détérioration thermiques du disque de friction lors d'un glissement. Les documents brevet EP2532911A1 et EP137247B1 illustrent de telles solutions de protection. Toutefois, ces techniques ne traitent pas spécifiquement l'usure de la butée de débrayage.

Un objectif de l'invention est de proposer une solution de protection de la butée de débrayage visant à alerter le conducteur d'une mauvaise utilisation de l'embrayage ou d'une usure prématurée de la butée de débrayage. L'invention a également pour objectif d'implémenter au dispositif de contrôle d'un véhicule une fonction de surveillance spécifique à l'état d'usure de la butée afin de prévenir une panne.

Plus précisément, l'invention concerne un procédé de protection d'une butée de débrayage d'un dispositif d'embrayage à commande à pédale d'embrayage pour un véhicule automobile. Selon l'invention, le procédé comporte les étapes suivantes :

- lors de la détection d'une situation d'actionnement de la butée de débrayage, la détermination d'un nombre de tours qui ont été exécutés par la butée de débrayage durant ladite situation d'actionnement, la situation d'actionnement de la butée étant détectée si une valeur d'un signal d'actionnement de la commande à pédale d'embrayage (20) dépasse un seuil de détection,

- et l'émission d'un signal d'alerte en fonction dudit nombre de tours et d'un profil de mission prédéterminé de la butée de débrayage.

Selon une variante, le nombre de tours qui ont été exécutés par la butée de débrayage durant ladite situation d'actionnement est déterminé à partir de la mesure du régime d'un arbre entrainant relié en entrée du dispositif d'embrayage.

Dans un premier cas d'alerte, un signal d'alerte est émis lorsque le nombre de tours exécutés par la butée de débrayage durant une opération de débrayage est supérieur à un seuil prédéterminé du profil de mission.

Dans un deuxième cas d'alerte, un signal d'alerte est émis lorsque le nombre total de tours de la butée de débrayage en situation d'actionnement depuis l'état de mise en service de ladite butée est supérieur à un compteur de tours prédéterminé du profil de mission.

Plus précisément, le compteur de tours prédéterminé du profil de mission est une fonction linéaire selon la formule suivante : $Y = aX + b$, Y étant le nombre total de tours exécutés par la butée de débrayage et X étant le nombre de kilomètres parcourus par le véhicule depuis la mise en service de la butée, a et b étant des valeurs constantes.

Dans un troisième cas d'alerte, un signal d'alerte est émis lorsque le nombre total de tours de la butée de débrayage en situation d'actionnement depuis l'état de mise en service de ladite butée de débrayage est supérieur à un indicateur prédéterminé de fin de vie du profil de mission.

En outre, il est prévu selon l'invention un véhicule automobile comprenant un dispositif d'embrayage à commande à pédale d'embrayage et un dispositif de contrôle, dans lequel le dispositif de contrôle exécute le procédé de protection selon l'un quelconque des modes de réalisation précédent.

Grâce à l'invention, le conducteur est informé d'une usure prématurée de la butée résultant d'une conduite inadaptée du véhicule. Le procédé de protection permet de détecter les situations de détérioration prématurée en fonction d'un profil de mission connu du véhicule et d'alerter le conducteur afin que celui-ci puisse rectifier sa conduite ou prévenir une panne de la butée si celle-ci arrive en fin de vie.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :

- la figure 1 représente un dispositif d'embrayage à commande à pédale d'embrayage ;

- la figure 2 représente un synoptique des modules fonctionnels d'un dispositif de contrôle apte à mettre en œuvre le procédé de protection selon l'invention ;

- la figure 3 représente une séquence du procédé de protection selon l'invention ;

- la figure 4 est un graphique représentant un profil de mission et une situation d'émission d'une alerte en fonction du nombre de tours exécutés par la butée durant une opération de débrayage ;

- la figure 5 est un graphique représentant un profil de mission et les situations d'émission d'une alerte en fonction du nombre total de tours exécutés par la butée de débrayage depuis la mise en service de ladite butée.

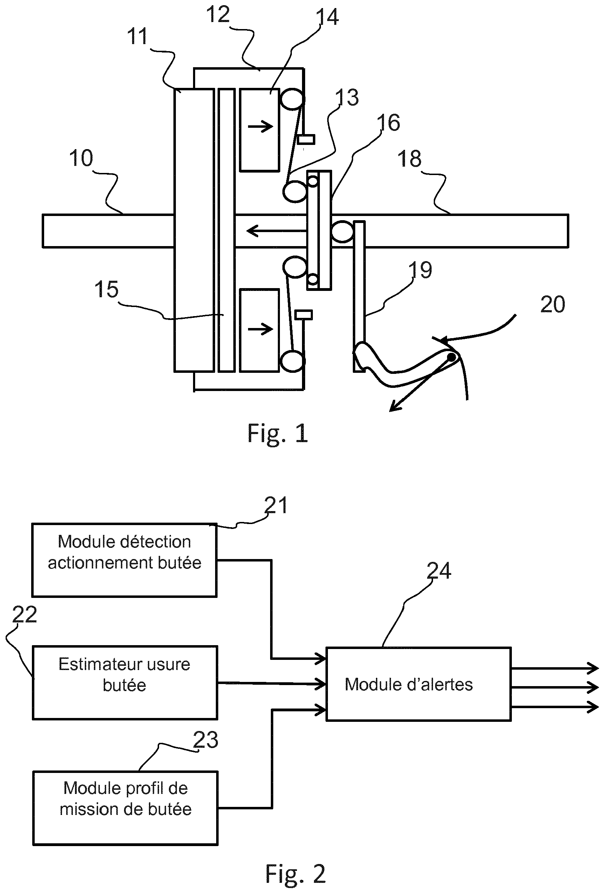

L'invention concerne la protection de la butée de débrayage d'un dispositif d'embrayage à commande à pédale d'embrayage d'un véhicule automobile. On se reporte à la figure 1 dans laquelle on représente un dispositif d'embrayage accouplant un arbre entrainant 10 et un arbre entrainé 18, tels que par exemple un vilebrequin d'un moteur thermique et l'arbre primaire d'une boite de vitesses.

Typiquement, un dispositif d'embrayage comprend un couvercle 12 relié par des moyens de fixation à un volant moteur 11 monté solidaire en rotation sur l'arbre entrainant 10. Entre le couvercle 12 et le volant moteur 11 sont disposés dans cet ordre : un diaphragme 13, un plateau de pression 14 et un disque de friction 15 monté solidaire en rotation sur l'arbre entrainé 18.

Le diaphragme 13 est un corps élastique en contact avec le couvercle 12 et comprend une partie périphérique pleine et une partie intérieure formée de doigts qui s'étendent radialement à partir de la partie périphérique de façon similaire à une rondelle Belleville. Le plateau de pression 14 est mobile en translation sous l'action de la partie périphérique du diaphragme 13. Au repos, le plateau de pression 14 est poussé contre le disque de friction 15. L'ensemble formé par le volant moteur 11, le couvercle 12, le diaphragme 13, le plateau de pression 14 et le disque de friction 15 est en transmission de couple.

Comme cela est représenté par les flèches sur la figure 1, lorsqu'une force de poussée axiale s'exerce sur la partie intérieure du diaphragme 13 en direction du disque de friction 15, la partie périphérique du diaphragme s'écarte dans le sens opposé au disque de friction 15, écartant alors le plateau de pression 14 du disque de friction 15 de manière à libérer le disque de friction 15 et rompre la transmission de couple.

Comme cela est bien connu, l'exercice de la force de poussée axiale sur la partie intérieure du diaphragme 13 est opéré au moyen d'une butée de débrayage 16. La butée de débrayage 16 est apte à coulisser longitudinalement sur l'arbre primaire 18. La butée de débrayage 16 comprend d'une part une partie tournante, de type roulement, montée en interface avec la partie intérieure du diaphragme 13, et d'autre part une partie fixe jouant le rôle de plateau d'appui, positionnée du côté opposé au diaphragme 13, qui est reliée à une fourchette d'actionnement 19 d'une commande à pédale d'embrayage 20 actionnable par le conducteur.

Lors de l'exercice de la force de poussée axiale de débrayage, un effort important s'exerce sur le roulement de la butée de débrayage 16 provoquant son usure. L'invention cherche à réduire son usure au moyen d'une fonction de protection mise en œuvre par le dispositif de contrôle du groupe motopropulseur en communiquant au conducteur un ou plusieurs messages d'alertes déterminés en fonction d'un profil de mission de la butée de débrayage connu en conception.

La figure 2 décrit les modules fonctionnels de la fonction de protection de l'invention. Le dispositif de contrôle (couramment appelé superviseur, unité de commande ou par l'acronyme ECU pour « Electronic Control Unit » en anglais) comporte un ou plusieurs calculateurs à circuits intégrés couplés à des mémoires et destinés à exécuter des fonctions de pilotage pour le fonctionnement du groupe motopropulseur. Dans le cadre de l'invention, les mémoires mémorisent la fonction de protection contenant les instructions d'exécution du procédé de protection de la butée de débrayage.

Plus précisément, un premier module 21 est en charge de la détection d'une situation d'actionnement de la butée de débrayage, un deuxième module 22 est en charge d'estimer l'usure de la butée de débrayage à partir de la détermination d'un nombre de tours sous effort qui ont été exécutés par la butée de débrayage lors d'une situation d'actionnement, un troisième module 23 est en charge de fournir un profil de mission connu de la butée de débrayage et un quatrième module d'alerte 24 est en charge d'élaborer et émettre une alerte en fonction de l'usure estimée de la butée et du profil de mission.

La détection de la situation d'actionnement de la butée de débrayage par le module 21 est opérée à partir d'un signal d'actionnement de la commande à pédale d'embrayage, tel qu'un signal d'actionnement émis à partir d'un capteur de position ou de pression de la commande à pédale d'embrayage, ou un capteur de pression hydraulique de la commande à pédale d'embrayage.

L'estimateur d'usure 22 de la butée de débrayage détermine un nombre de tours de la butée exécutés sous l'action de la force de poussée axiale de la fourchette à partir de données mesurées, estimées ou calculées du groupe motopropulseur, telles que le régime de l'arbre entrainant ou le régime de l'arbre entrainé et de la durée de la situation d'actionnement détectée par le premier module 21. On entend par un tour de la butée, un tour qui est réalisé par la partie de la butée en interface avec le diaphragme. Dans cet exemple la partie tournante de la butée est en interface avec le diaphragme solidaire du volant moteur par l'intermédiaire du couvercle, le procédé de protection estime donc de préférence le nombre de tours de la butée à partir des données collectées relatives au régime de rotation de l'arbre entraînant. Il est envisageable que le nombre de tours de la butée soit estimé directement par un capteur spécifique dans l'hypothèse qu'un tel capteur soit présent.

Le profil de mission de la butée de débrayage est connu en conception du véhicule, et pour la mise en œuvre de l'invention est mémorisé et consultable en mémoire du dispositif de contrôle. Le module du profil de mission 23 contient des données concernant un modèle d'usure de la butée. Plus précisément, le profil de mission peut contenir un seuil prédéterminé indiquant une valeur maximale recommandée de nombre de tours de la butée lors d'une opération de débrayage, valeur au-delà de laquelle il est jugé que la conduite provoque une usure prématurée.

En outre, le profil de mission peut contenir un compteur de tours prédéterminé relativement à un compteur kilométrique du véhicule permettant d'estimer l'état d'usure de la butée de débrayage et un indicateur prédéterminé de fin de vie de la butée indiquant une valeur maximale de tours au-delà de laquelle il est estimé que la butée approche un état défectueux.

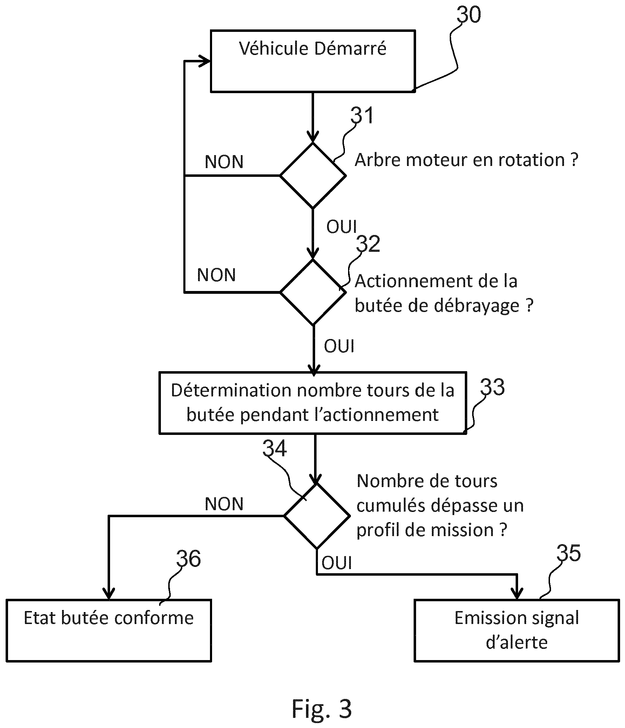

Le quatrième module d'alerte 24 est apte à émettre l'une quelconque ou toutes les alertes qui seront développées lors de la description du procédé en figure 3, 4 et 5.

La figure 3 décrit le procédé de protection mise en œuvre par le dispositif de contrôle du véhicule. A une étape initiale 30, le véhicule est démarré. Le procédé vérifie à une étape 31 si l'arbre entrainant du véhicule est en rotation pour s'assurer que le diaphragme est également en rotation et susceptible d'exercer une force de rotation sur le roulement de la butée de débrayage.

Dans un tel cas, le procédé vérifie ensuite à une étape 32 si la chaine de transmission du véhicule est configurée dans une situation d'actionnement de la butée de débrayage. A cet effet, le procédé compare le signal d'actionnement de la commande à pédale d'embrayage par rapport à un seuil de détection et vérifie si la valeur du signal d'actionnement de la commande à pédale d'embrayage dépasse ledit seuil. Le seuil de détection correspond à une valeur d'enfoncement de la pédale, par exemple une valeur comprise entre 0% et environ 20% d'enfoncement de la course de la pédale de débrayage. D'autres modes de détection sont prévus par exemple à partir d'une valeur de pression exercée sur la pédale, ou à partir d'une valeur de pression hydraulique dans le circuit de commande de la pédale de débrayage.

Plus précisément, le seuil de détection est configuré de sorte à détecter l'instant à partir duquel la force de poussée axiale exercé par la butée de débrayage provoque un début de rotation de la partie tournante de la butée ou une rotation sous une force de poussée. De cette manière, le procédé de protection détecte une situation provoquant une usure de la butée.

Ensuite, lors de la détection d'une situation d'actionnement de la butée de débrayage, le procédé comporte la détermination 33 du nombre de tours qui ont été exécutés par la butée de débrayage durant ladite situation d'actionnement. Pour cela, le nombre de tours qui ont été exécutés par la butée de débrayage durant ladite situation d'actionnement est déterminé à partir de la mesure du régime du moteur thermique et de la durée d'actionnement de la butée. Le nombre de tours peut être estimé à partir d'une valeur moyenne du régime de l'arbre entrainant durant une période de la séquence d'actionnement.

Plus précisément, le procédé de protection détermine pour chaque opération de débrayage le nombre de tours exécutés par la butée et mémorise le nombre de tours de chaque séquence et/ou le nombre total de tours de toutes les séquences de débrayage. Pour la mise en œuvre du comptage, le module de détection à partir du signal d'actionnement et du seuil de détection déclenche et met fin à une séquence de comptage du nombre de tours. On précise qu'une opération de débrayage est délimitée par le début et la fin de l'actionnement sur la pédale de débrayage.

Comme cela a déjà été évoqué précédemment, d'autres modes d'estimation ou de mesure du nombre de tours de la butée de débrayage sont envisageable, par exemple à partir du régime de l'arbre entrainé, ou du paramètre de vitesse roues si l'état de la chaine de transmission permet à l'estimateur de calculer le nombre de tours de la partie tournante de la butée, par exemple en fonction d'un modèle connu de la transmission conformément à l'équation suivante :

$$\text{Régime arbre entrainé (tr/min)} = \text{Vitesse véhicule (m/min)} /$$

$$(\text{démultiplication de boîte de vitesse} * \text{développante}_{\text{roue}} \text{ (m)}),$$

avec :

$$\text{Démultiplication de boîte de vitesse} = \text{Démultiplication de boîte de vitesse}_{\text{rapport considéré}} *$$

$$\text{Démultiplication }_{\text{pont}}$$

Ensuite, le procédé de protection à une étape 34 compare les données estimées du nombre de tours de la butée avec un profil de mission prédéterminé du module de profil de mission. Ensuite, le procédé comporte l'émission 35 d'un signal d'alerte en fonction du nombre de tours et du profil de mission prédéterminé de la butée de débrayage. Plus précisément, il est prévu trois cas d'alertes pouvant être mis en application indépendamment les uns des autres selon la configuration de protection voulue. Si aucun des cas d'alerte n'est détecté, l'état de la butée de débrayage est considéré acceptable et le procédé de protection n'émet aucune alerte.

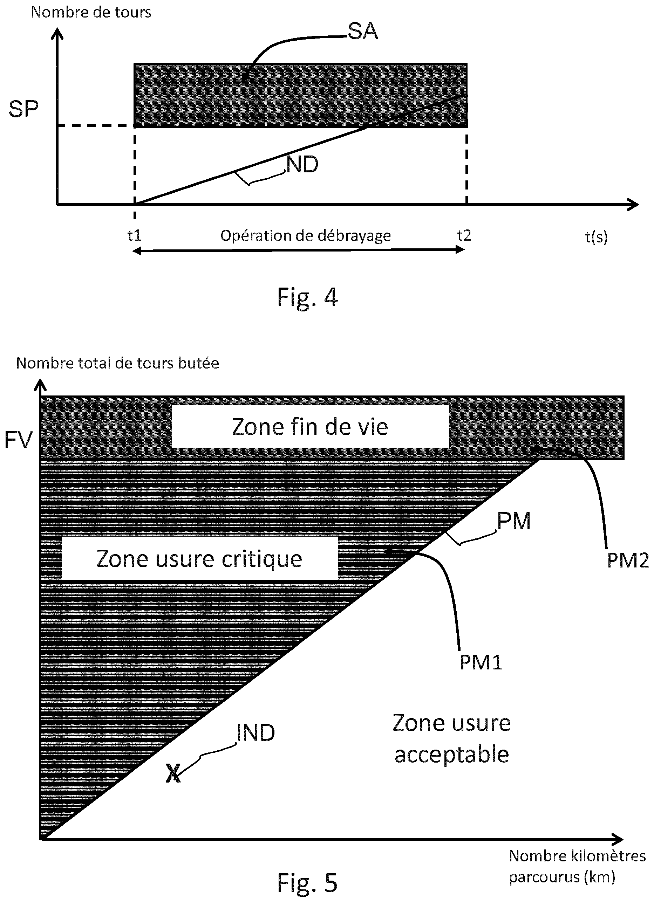

En figure 4, un premier cas d'alerte est illustré. La figure 4 est un graphique représentant un seuil prédéterminé SP du profil de mission et une situation d'émission d'une alerte SA en fonction du nombre de tours ND exécutés par la butée de débrayage durant une opération de débrayage. Les instants t1 et t2 délimitent une opération de débrayage, t1 étant l'instant correspondant au dépassement du seuil de détection d'actionnement de la commande à pédale d'embrayage et t2 étant l'instant pour lequel le signal d'actionnement retourne en dessous du seuil de détection dudit actionnement. L'axe des ordonnées indique la valeur du nombre de tours ND de la butée qui a été estimée durant l'opération de débrayage. La ligne croissante représente le nombre de tours ND qui augmente durant l'opération de débrayage et la zone hachurée SA représente une zone d'alerte indiquant les valeurs qui sont supérieures à un seuil prédéterminé SP du profil de mission.

Dans ce premier cas, un signal d'alerte est émis lorsque le nombre de tours ND exécutés par la butée de débrayage durant l'opération de débrayage est supérieur au seuil prédéterminé SP du profil de mission. Dans ce contexte, le signal d'alerte affiche un message au conducteur du type par exemple : « *Veuillez à ne pas rester trop longtemps avec la pédale de débrayage enfoncée* ». Le seuil prédéterminé SP est une valeur constante mémorisée dans le module du profil de mission . Cette alerte vise à réduire les actes de mauvaise conduite afin d'empêcher une usure prématurée de la butée.

En figure 5, un deuxième et un troisième cas d'alerte sont illustrés. En abscisse est représenté le compteur kilométrique du véhicule depuis la mise en service de la butée de débrayage et en ordonné l'estimation du nombre total de tours exécutés par la butée de débrayage depuis sa mise en service. La ligne croissante linéaire PM représente un compteur de tours prédéterminé de la butée de débrayage du profil de mission. La croix d'indication affichée sur la figure 5 représente le nombre total de tours estimés IND de la butée relativement aux kilomètres parcourus depuis la mise en service de la butée.

Selon un modèle d'usure connu de la butée de débrayage, le compteur de tour PM est le résultat d'une fonction linéaire représentable sous la forme d'une équation $Y = aX + b$, où Y est le nombre total de tours de la butée depuis la mise en service de la dite butée, et X le nombre de kilomètres parcourus par le véhicule depuis la mise en service de la butée, a et b étant des valeurs constantes mémorisées dans le module du profil de mission.

Dans le deuxième cas, un signal d'alerte est émis lorsque le nombre total de tours IND de la butée de débrayage en situation d'actionnement depuis l'état de mise en service de ladite butée est supérieur au compteur de tours prédéterminé PM du profil de mission relativement au compteur kilométrique du véhicule. L'indicateur IND est alors localisé dans la zone hachurée PM1. Dans ce contexte, le signal d'alerte affiche un message au conducteur du type par exemple : « *Comportement à risque pour votre embrayage car utilisation sévère. Veuillez maintenir moins souvent la pédale d'embrayage enfoncée.*»

Dans le troisième cas, un signal d'alerte est émis lorsque le nombre total de tours de la butée de débrayage en situation d'actionnement depuis l'état de mise en service de ladite butée de débrayage est supérieur à un indicateur prédéterminé de fin de vie FV du profil de mission. L'indicateur IND est alors localisé dans la zone hachurée PM2. Dans ce contexte, le signal d'alerte affiche un message au conducteur du type par exemple : « *Butée de débrayage en fin de vie, veuillez vous rendre en concession.*» L'indicateur de fin de vie FV est une valeur constante mémorisée dans le module du profil de mission.

L'invention s'applique à tout dispositif d'embrayage à commande à pédale comprenant une butée de débrayage sujette à l'usure et qu'il est nécessaire de protéger. Il a été décrit un dispositif d'embrayage à butée « poussée », toutefois l'invention concerne également d'autres types d'embrayage tels que par exemple de type à butée « tirée ».

**Revendications**

1. Procédé de protection d'une butée de débrayage (16) d'un dispositif d'embrayage à commande à pédale d'embrayage (20) pour un véhicule automobile, **caractérisé en ce que** le procédé comporte les étapes suivantes :

   - lors de la détection (32) d'une situation d'actionnement de la butée de débrayage, la détermination (33) d'un nombre de tours qui ont été exécutés par la butée de débrayage durant ladite situation d'actionnement, la situation d'actionnement de la butée étant détectée si une valeur d'un signal d'actionnement de la commande à pédale d'embrayage (20) dépasse un seuil de détection,
   - et l'émission (35) d'un signal d'alerte en fonction dudit nombre de tours et d'un profil de mission prédéterminé de la butée de débrayage.

2. Procédé selon la revendication 1, **caractérisé en ce que** le nombre de tours qui ont été exécutés par la butée de débrayage durant ladite situation d'actionnement est déterminé à partir de la mesure du régime d'un arbre entrainant (10) relié en entrée du dispositif d'embrayage.

3. Procédé selon l'une quelconque des revendications 1 à 2, **caractérisé en ce qu'**un signal d'alerte est émis lorsque le nombre de tours (ND) exécutés par la butée de débrayage (16) durant une opération de débrayage est supérieur à un seuil prédéterminé (SP) du profil de mission.

4. Procédé selon l'une quelconque des revendications 1 à 3, **caractérisé en ce qu'**un signal d'alerte est émis lorsque le nombre total de tours (IND) de la butée de débrayage en situation d'actionnement depuis l'état de mise en service de ladite butée est supérieur à un compteur de tours prédéterminé (PM) du profil de mission.

5. Procédé selon la revendication 4, **caractérisé en ce que** le compteur de tours prédéterminé (PM) du profil de mission est une fonction linéaire selon la formule suivante : $Y = aX + b$, Y étant le nombre total de tours exécutés par la butée de débrayage et X étant le nombre de kilomètres parcourus par le véhicule depuis la mise en service de la butée, a et b étant des valeurs constantes.

6. Procédé selon l'une quelconque des revendication 1 à 5, **caractérisé en ce qu'**un signal d'alerte est émis lorsque le nombre total (IND) de tours de la butée de débrayage en situation d'actionnement depuis l'état de mise en service de ladite butée de débrayage est supérieur à un indicateur prédéterminé de fin de vie (FV) du profil de mission.

7. Véhicule automobile comprenant un dispositif d'embrayage à commande à pédale d'embrayage et un dispositif de contrôle, **caractérisé en ce que** le dispositif de contrôle exécute le procédé de protection selon l'une quelconque des revendications 1 à 6.

**Patentansprüche**

1. Verfahren zum Schutz eines Kupplungsanschlags (16) einer Kupplungsvorrichtung mit Kupplungspedalsteuerung (20) für ein Kraftfahrzeug, **dadurch gekennzeichnet, dass** das Verfahren die folgenden Schritte umfasst:

   - bei dem Erfassen (32) einer Betätigungssituation des Kupplungsanschlags, Bestimmen (33) einer Anzahl von Umdrehungen, die von dem Kupplungsanschlag während der Betätigungssituation ausgeführt wurde, wobei die Betätigungssituation des Anschlags erfasst wird, falls ein Wert eines Betätigungssignals der Kupplungspedalsteuerung (20) einen Erfassungsschwellenwert überschreitet,
   - und Senden (35) eines Warnsignals in Abhängigkeit von der Anzahl von Umdrehungen und eines vorbestimmten Einsatzprofils des Kupplungsanschlags.

2. Verfahren nach Anspruch 1, **dadurch gekennzeichnet, dass** die Anzahl von Umdrehungen, die von dem Kupplungsanschlag während der Betätigungssituation ausgeführt wurde, ausgehend von der Messung der Antriebswellendrehzahl (10), die am Eingang der Kupplungsvorrichtung verbunden ist, bestimmt wird.

3. Verfahren nach einem der Ansprüche 1 bis 2, **dadurch gekennzeichnet, dass** ein Warnsignal gesendet wird, wenn die Anzahl von Umdrehungen (ND), die von dem Kupplungsanschlag (16) während einer Kupplungsbetätigung ausgeführt wurde, größer ist als ein vorbestimmter Schwellenwert (SP) des Einsatzprofils.

**4.** Verfahren nach einem der Ansprüche 1 bis 3, **dadurch gekennzeichnet, dass** ein Warnsignal gesendet wird, wenn die Gesamtanzahl von Umdrehungen (IND) des Kupplungsanschlags in Betätigungssituation seit der Inbetriebnahme des Anschlags größer ist als ein vorbestimmter Umdrehungszähler (PM) des Einsatzprofils.

**5.** Verfahren nach Anspruch 4, **dadurch gekennzeichnet, dass** der vorbestimmte Umdrehungszähler (PM) des Einsatzprofils eine lineare Funktion gemäß der folgenden Formel ist: Y = aX + b, wobei Y die Gesamtanzahl von Umdrehungen ist, die von dem Kupplungsanschlag ausgeführt wird, und X die Anzahl von Kilometern ist, die das Fahrzeug seit der Inbetriebnahme des Anschlags zurückgelegt hat, wobei a und b konstante Werte sind.

**6.** Verfahren nach einem der Ansprüche 1 bis 5, **dadurch gekennzeichnet, dass** ein Warnsignal gesendet wird, wenn die Gesamtanzahl (IND) von Umdrehungen des Kupplungsanschlags in Betätigungssituation seit der Inbetriebnahme des Kupplungsanschlags größer ist als ein vorbestimmter Lebensendeindikator (FV) des Einsatzprofils.

**7.** Kraftfahrzeug, das eine Kupplungsvorrichtung mit Kupplungspedalsteuerung und eine Steuervorrichtung umfasst, **dadurch gekennzeichnet, dass** die Steuervorrichtung das Schutzverfahren nach einem der Ansprüche 1 bis 6 ausführt.


**Claims**

**1.** A method for protecting a throwout bearing (16) of a clutch device with a clutch pedal control (20) for an automobile, **characterized in that** the method comprises the following steps:

- during the detection (32) of a situation of actuation of the throwout bearing, the determining (33) of a number of revolutions which have been executed by the throwout bearing during said actuation situation, the actuation situation of the bearing being detected if a value of an actuation signal of the clutch pedal control (20) exceeds a detection threshold,
- and the emission (35) of a warning signal as a function of said number of revolutions and of a predetermined mission profile of the throwout bearing.

**2.** The method according to Claim 1, **characterized in that** the number of revolutions which have been executed by the throwout bearing during said actuation situation is determined from the measurement of the speed of a driving shaft (10) connected at the input of the clutch device.

**3.** The method according to any one of Claims 1 to 2, **characterized in that** a warning signal is emitted when the number of revolutions (ND) executed by the throwout bearing (16) during a declutching operation is greater than a predetermined threshold (SP) of the mission profile.

**4.** The method according to any one of Claims 1 to 3, **characterized in that** a warning signal is emitted when the total number of revolutions (IND) of the throwout bearing in actuation situation from the state of implementation of said bearing is greater than a predetermined revolution counter (PM) of the mission profile.

**5.** The method according to Claim 4, **characterized in that** the predetermined revolution counter (PM) of the mission profile is a linear function according to the following formula: Y = aX + b, Y being the total number of revolutions executed by the throwout bearing and X being the number of kilometres travelled by the vehicle from the implementation of the bearing, a and b being constant values.

**6.** The method according to any one of Claims 1 to 5, **characterized in that** a warning signal is emitted when the total number (IND) of revolutions of the throwout bearing in actuation situation from the state of implementation of said throwout bearing is greater than a predetermined indicator of end of life (FV) of the mission profile.

**7.** An automobile including a clutch device with a clutch pedal control and a control device, **characterized in that** the control device executes the protection method according to any one of Claims 1 to 6.

Fig. 1

Fig. 2

Fig. 3

Nombre de tours

SA

SP

ND

t1      Opération de débrayage      t2      t(s)

Fig. 4

Nombre total de tours butée

Zone fin de vie

FV

Zone usure critique

PM

PM2

PM1

IND

X

Zone usure
acceptable

Nombre kilomètres
parcourus (km)

Fig. 5

**EP 3 450 787 B1**

## RÉFÉRENCES CITÉES DANS LA DESCRIPTION

**Documents brevets cités dans la description**

- WO 2008036014 A
- EP 2532911 A1
- EP 137247 B1